# EUROPEAN PATENT SPECIFICATION

(11) **EP 2 216 163 B1**
(45) Date of publication and mention of the grant of the patent: **22.07.2015**
(21) Application number: 10152057.5
(22) Date of filing: 29.01.2010
(51) Int. Cl.: B29C 65/52, D06H 5/00

(54) **Cloth bonding apparatus**
Vorrichtung zum Verbinden vom Stoff
Appareil de liaison de tissus

(30) Priority: 04.02.2009 JP 2009023229
(43) Date of publication of application: 11.08.2010
(73) Proprietor: Brother Kogyo Kabushiki Kaisha, Nagoya-shi, Aichi 467-8561 (JP)
(72) Inventor: Ohmura, Yoshikazu, Nagoya-sh Aichi 467-8562 (JP); Iwakoshi, Hiroyasu, Nagoya-sh Aichi 467-8562 (JP); Yamaura, Hiroki, Nagoya-sh Aichi 467-8562 (JP); Umeda, Kazutoshi, Nagoya-sh Aichi 467-8562 (JP); Yoshimoto, Naoki, Nagoya-sh Aichi 467-8562 (JP)
(74) Representative: Prüfer & Partner GbR European Patent Attorneys

(56) References cited:
- CH-A- 478 279
- JP-A- 7 070 807
- JP-A- 53 006 681
- US-A- 2 525 355
- US-A- 2 664 938
- US-A- 3 295 493
- US-A1- 2003 010 439
- US-A1- 2004 074 597

## Description

### BACKGROUND

The present invention relates to a cloth bonding apparatus. More specifically, the present invention relates to a cloth bonding apparatus that bonds two layers of cloth by applying an adhesive onto one of the layers of cloth and pressing them together.

The cloth bonding apparatus is directed for bonding cloths with an adhesive, instead of sewing the cloths with a needle and a thread. By bonding the cloths with the adhesive, the cloth bonding apparatus can eliminate unevenness due to the thread that may be formed in the cloth surfaces when the cloths are sewn with the thread. The cloth surfaces processed by the bonding apparatus are smooth. Thus, the bonding apparatus is capable of manufacturing nice and soft clothes, and the like.

The bonding apparatus discharges a liquid adhesive from the nozzle. The adhesive adheres onto a cloth. Then, a worker places another cloth on the cloth onto which the adhesive has been applied. The bonding apparatus presses both the cloths in a pressurized manner. The bonding apparatus thus bonds the cloths together.

In a case where the adhesive is discharged from the nozzle while a gap is present between the cloth and the nozzle, the adhesive adheres onto the cloth intermittently and non-uniformly. In such a case, the adhesive may not be applied on the cloth continuously and uniformly. On the other hand, in a case no gap is present between the cloth and the nozzle and the cloth is strongly pressed to the nozzle, the adhesive cannot be discharged from the nozzle.

On the contrary, an apparatus described in Japanese Patent Application Laid-Open Publication No. JP-2002-104318 vertically moves a backup roller supporting an adherend (paper band) with two roller pressers. The apparatus can adjust an interval between a discharge port (nozzle) of the adhesive and the adherend so that the adhesive is applied on the adherend uniformly and continuously.

Document US 2003/010 439 A1 discloses a cloth bonding apparatus, comprising a nozzle through which an adhesive is dischargeable onto a first layer of cloth, a feeding portion adapted to press and feed the first layer of cloth with a second layer of cloth in a direction intersecting with a direction in which the adhesive is discharged from the nozzle, and a support portion that is positioned opposite to the nozzle in such a manner that the first layer of cloth can be interposed between the second portion and the nozzle.

A corresponding or similar disclosure can also be taken from the documents US 2004/074 597 A1, US 2 664 938 A, US 3 295 493 A, JP 07 070807 A, CH 478 279 A, US 2 525 355 A and JP 53 006681 A.

### SUMMARY

In the apparatus described in the above publication, there may be a problem that when a thickness of the adherend is changed, a worker may need to vertically adjust the roller pressers to change the position of the backup roller in the vertical direction.

It is an object of the present invention to provide a cloth bonding apparatus that eliminates the need of adjusting an interval between a nozzle and a cloth by a worker even when a thickness of the cloth is changed.

The cloth bonding apparatus according to the present invention includes a nozzle through which an adhesive is dischargeable onto a first layer of cloth, a feeding portion adapted to press and feed the first layer of cloth with a second layer of cloth in a direction intersecting with a direction in which the adhesive is discharged from the nozzle, a support portion that is positioned opposite to the nozzle in such a manner that the first layer of cloth can be interposed between the support portion and the nozzle and that is adapted to support the first layer of cloth by moving toward the nozzle, and an urging mechanism that urges the support portion toward the nozzle. The support portion urges the first layer of cloth to press it to the nozzle with a constant force. Consequently, according to the cloth bonding apparatus, a gap can be prevented from being generated between the nozzle and the first layer of cloth. According to the cloth bonding apparatus, the first layer of cloth can be prevented from being strongly pressed to the nozzle, because the urging mechanism applies an appropriate urging force. Thus, the adhesive can be applied on the first layer of cloth with a uniform thickness. The worker does not need to adjust a position of the first layer of cloth, even when the thickness of the first layer of cloth has changed.

In the cloth bonding apparatus, the support portion may include a first roller, the feeding portion may include a second roller, the urging mechanism may include an arm portion that rotatably supports the first roller and a spring portion that is connected to the arm portion. The arm portion may rotatably support the first roller at an end portion and the second roller may have a shaft at the rotation center that swingably supports the arm portion. In a case where the support portion includes the first roller, a friction between the first layer of cloth and the support portion is small. Thus, the cloth bonding apparatus may not give an extra resistance to the first layer of cloth while the first layer of cloth is being fed, thereby preventing a failure of corrugated cloth. In a case where the feeding portion includes the second roller, the cloth bonding apparatus can support and feed the first and second layers of cloth by rotating the second roller. In a case where the urging mechanism includes the arm portion and the spring portion, and the spring portion adjusts the position of the support portion when the thickness of the first layer of cloth has changed, the worker does not need to adjust the interval between the first layer of cloth and the nozzle even when the thickness of the first layer of cloth has changed. In a case where the center of swing of the arm portion is at the center of rotation of the second roller, the distance between the first roller and the second roller is always constant. Thus, the second roller and the first roller do not contact each other even when the first roller swings.

In the cloth bonding apparatus, the support portion may include the first roller. In such a case, a friction between the first layer of cloth and the support portion is small. Thus, the cloth bonding apparatus does not give an extra resistance to the first layer of cloth, thereby preventing a failure of corrugated cloth.

In the cloth bonding apparatus, the feeding portion may include the second roller. In such a case, the second roller can support and feed the first and second layers of cloth along with its rotation.

In the cloth bonding apparatus, the urging mechanism may include an arm portion that supports the support portion and a spring portion that is connected to the arm portion. In such a case, the spring portion in the urging mechanism can adjust the position of the support portion when the thickness of the first layer of cloth has changed. Thus, the worker does not need to adjust the interval between the first layer of cloth and the nozzle even when the thickness of the first layer of cloth has changed.

The cloth bonding apparatus may further include a stopper that restricts the support portion so as not to move toward the nozzle beyond a specified distance. In such a case, the stopper can restrict the movement of the support portion so that the support portion does not move toward the nozzle beyond the specified distance.

### BRIEF DESCRIPTION OF THE DRAWINGS

Exemplary embodiments of the present disclosure will be described below in detail with reference to the accompanying drawings in which:
Fig. 1 is an upper front perspective view of the entire cloth bonding apparatus 1;
Fig. 2 is an upper front perspective view of a bonding machine 2;
Fig. 3 is a front view of the bonding machine 2;
Fig. 4 is a left side view of the bonding machine 2;
Fig. 5 is an upper front perspective view of the inner configuration of the bonding machine 2;
Fig. 6 is a left side view of the inner configuration of the bonding machine 2;

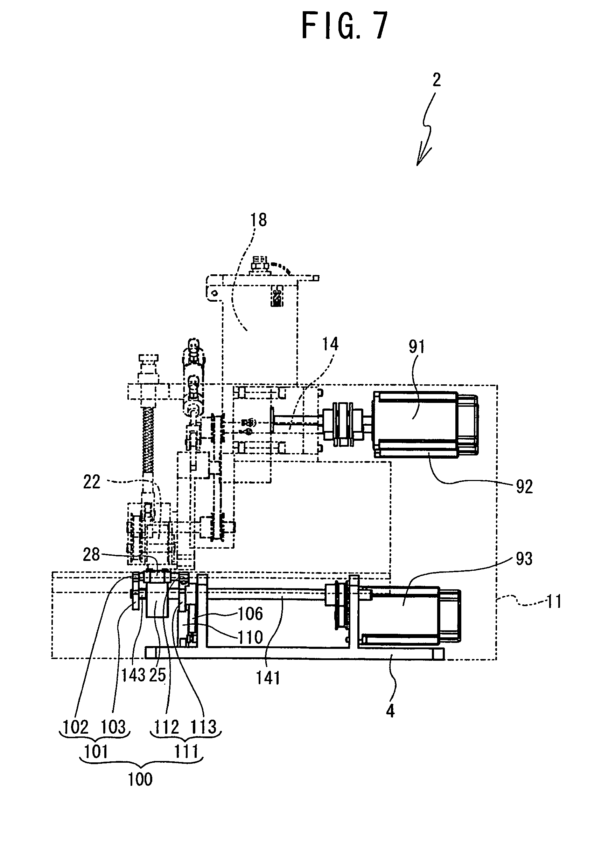

Fig. 7 is a front view of the inner configuration of the bonding machine 2;
Fig. 8 is an upper front perspective view of an urging roller support portion 100;
Fig. 9 is a sectional view taken along line I-I of Fig. 2;
Fig. 10 is a sectional view taken along line II-II of Fig. 2;
Fig. 11 is a partially enlarged perspective view of a nozzle 17 and a vicinity of the nozzle 17 at the time of bonding work; and
Fig. 12 is a left side view of the bonding machine 2 at the time of bonding work.

### DETAILED DESCRIPTION OF EXEMPLARY EMBODIMENTS

A cloth bonding apparatus 1 according to a first embodiment of the present invention will be described below with reference to the drawings.

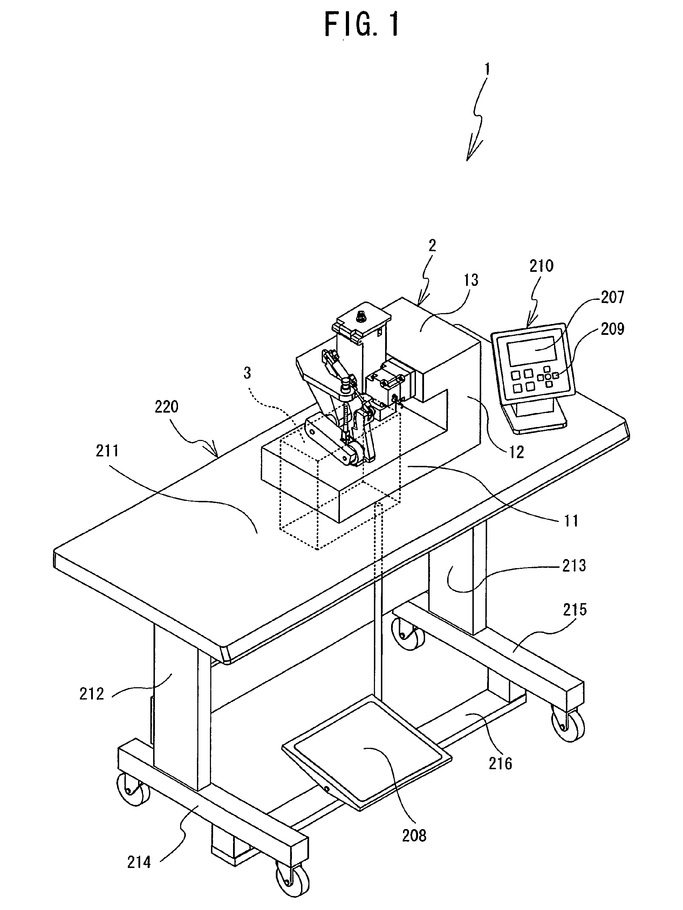

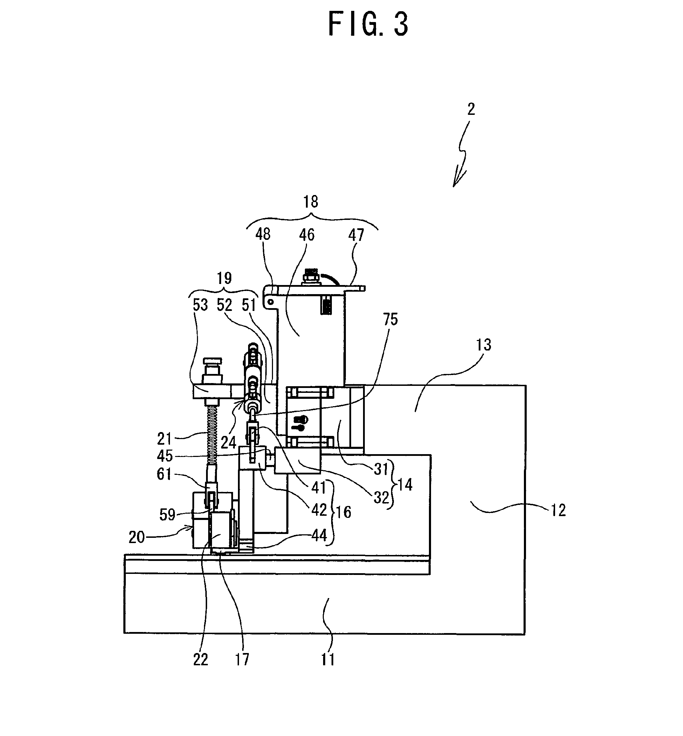

A configuration of the cloth bonding apparatus 1 will be described with reference to Figs. 1 to 4. In the following description, it is defined that the upper side, the lower side, the right side, the left side, the front face side, and the back face side of Fig. 3 are the upper side, the lower side, the right side, the left side, the front side, and the back side of a bonding machine 2, respectively.

An overall configuration of the cloth bonding apparatus 1 will be described with reference to Fig. 1. As shown in Fig. 1, the cloth bonding apparatus 1 includes a bonding machine 2 and a table 220. The bonding machine 2 is fixed to the table 220. The bonding machine 2 applies an adhesive between two layers of cloths arranged oppositely, and presses and feeds the cloths. The two layers of cloths are bonded together through the above operation of the bonding machine 2. A configuration of the bonding machine 2 will be described later in detail.

The table 220 includes a top board 211, left and right leg portions 212, 213, left and right support portions 214, 215, and a foot holder 216. The bonding machine 2 is fixed on the top board 211. The top board 211 has a rectangular plate shape in a plan view, with the right-and-left direction as its longitudinal direction. The length of the top board 211 in the right-and-left direction is about triple the length of the bonding machine 2 in the right-and-left direction. The length of the top board 211 in the back-and-forth direction is about twice the length of the bonding machine 2 in the back-and-forth direction.

The top board 211 has an operation panel 210 on the right side of a position where the bonding machine 2 is fixed. The operation panel 210 includes a liquid crystal display (LCD) portion 207 and a plurality of keys 209. The LCD portion 207 displays various items of information thereon. The keys 209 are directed for inputting various items of information. A worker may set various operations of the cloth bonding apparatus 1 by operating the keys 209 while looking at the LCD portion 207.

The left leg portion 212 having a plate shape extends vertically downwards from the left end of the top board 211, perpendicular to the upper face of the top board 211. The right leg portion 213 having a plate shape extends vertically downwards from the right end of the top board 211, perpendicular to the upper face of the top board 211. The left support portion 214 is connected to the lower end of the left leg portion 212. The right support portion 215 is connected to the lower end of the right leg portion 213. The left support portion 214 and the right support portion 215 each are substantially prismatic members with the back-and-forth direction as a longitudinal direction.

The foot holder 216 having an elongated plate shape connects the left support portion 214 and the right support portion 215 substantially at the centers thereof in the back-and-forth direction. A pedal 208 is provided substantially at the center of the foot holder 216 in the right-and-left direction. The worker may use the pedal 208 to adjust a feed speed of the cloths.

A control box 3 is fixed at the lower face of the top board 211. The control box 3 stores a control substrate having a CPU and the like mounted thereon. The control box 3 is electrically connected to the bonding machine 2, the operation panel 210, and the pedal 208.

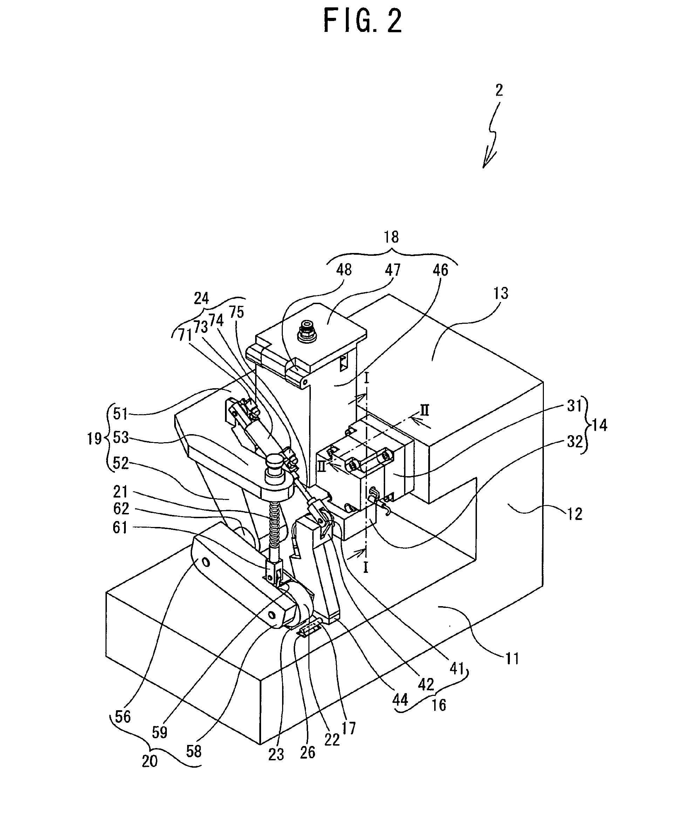

The configuration of the bonding machine 2 will be described with reference to Figs. 2 to 4. As shown in Figs. 2 and 3, the bonding machine 2 includes a bed portion 11, a pillar portion 12, and an arm portion 13. The bed portion 11 has a substantially rectangular parallelepiped shape with the right-and-left direction as the longitudinal direction. The bed portion 11 is fixed on the top board 211 (see Fig. 1). The pillar portion 12 extends vertically upwards from the right end of the bed portion 11. The arm portion 13 is connected to the upper end of the pillar portion 12 and extends leftward from the left side of the pillar portion 12. The length of the arm portion 13 in the right-and-left direction is about one third of the length of the bed portion 11 in the right-and-left direction.

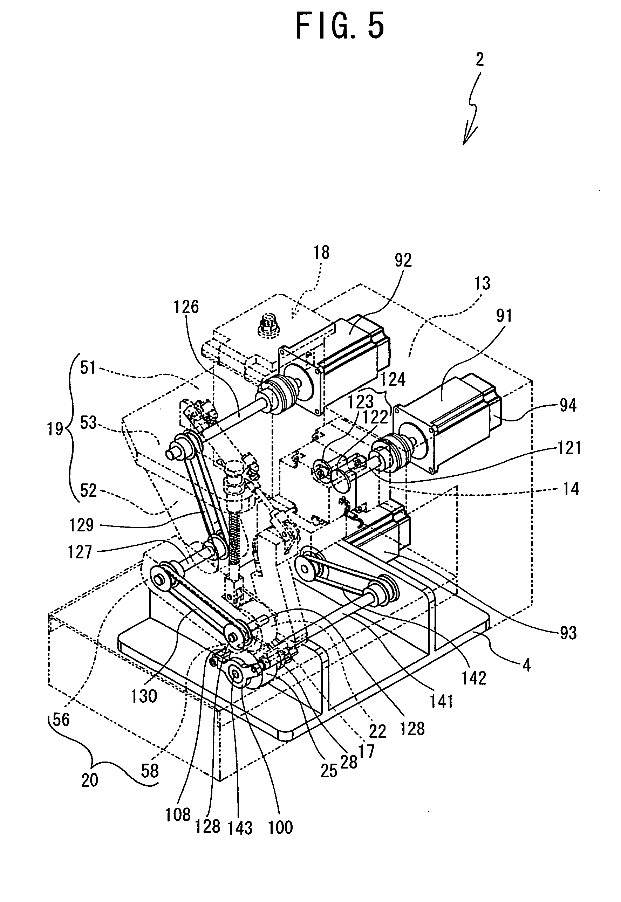

The bed portion 11 includes therein a lower feed roller 25 (see Fig. 5), a third motor 93 (see Fig. 5) and the like. The lower feed roller 25 presses and feeds cloths in conjunction with an upper feed roller 22, which will be described later. The third motor 93 drives the lower feed roller 25. The bed portion 11 functions as a base that supports the pillar portion 12. The pillar portion 12 supports the arm portion 13.

As shown in Fig. 2, the left end of the arm portion 13 supports a pump casing 14, a storage chamber 18, and a beam portion 19, from front to back in this order. The arm portion 13 includes therein a first motor 91 (see Fig. 5), a second motor 92 (see Fig. 5) and the like. The first motor 91 drives a gear pump 124 (see Fig. 5). The second motor 92 drives the upper feed roller 22.

The pump casing 14 will be described. As shown in Figs. 2 and 3, the pump casing 14 includes a first pump casing 31 and a second pump casing 32. The first pump casing 31 is a substantially cubic member. The first pump casing 31 is fixed on the left side face of the arm portion 13. The first pump casing 31 includes therein the gear pump 124 (see Fig. 5) and the like. The gear pump 124 supplies an appropriate amount of adhesive to the nozzle 17 with high accuracy. The second pump casing 32 is a substantially rectangular parallelepiped member. The second pump casing 32 extends downward from the left end portion of the lower face of the first pump casing 31. As shown in Fig. 3, the length of the first pump casing 31 in the vertical direction is substantially the same as the length of the arm portion 13 in the vertical direction. The position of the second pump casing 32 in the right-and-left direction is substantially the same as the center position of the bed portion 11 in the right-and-left direction.

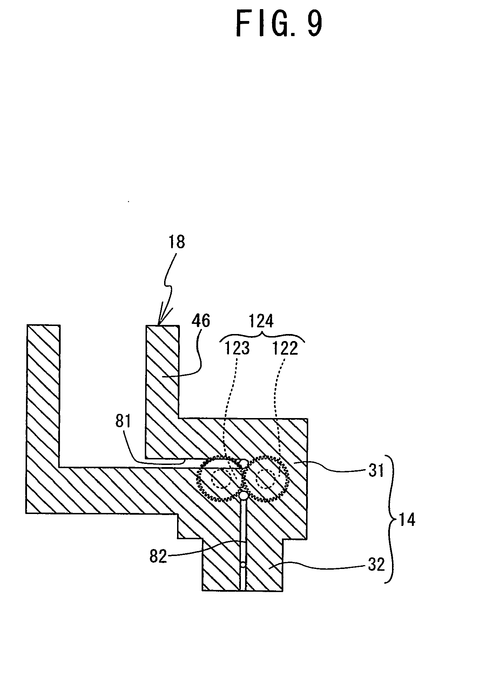

The second pump casing 32 includes a shaft portion 45 (see Fig. 3) on its left side. The shaft portion 45 is connected to the right side of the upper end portion 42 of a support portion 16 and swingably supports the support portion 16. The pump casing 14 includes a channel 81 (see Fig. 9) and a channel 82 (see Fig. 9), which will be described later. The channel 81 leads the adhesive from the storage chamber 18 to the gear pump 124. The channel 82 leads the adhesive from the gear pump 124 to the support portion 16.

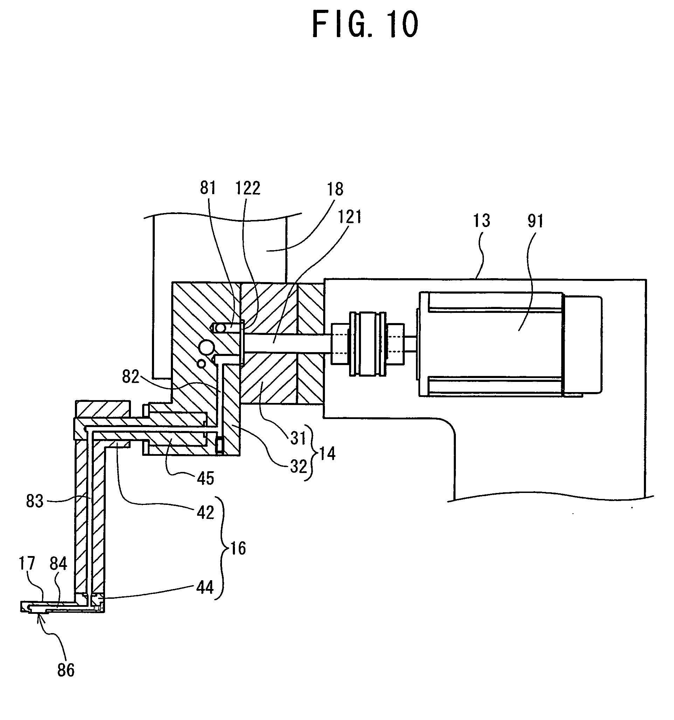

As shown in Figs. 2 and 3, the shape of the support portion 16 is substantially rectangular parallelepiped with the vertical direction as the longitudinal direction. A small gap is present between the lower end portion 44 of the support portion 16 and the bed portion 11. The support portion 16 includes therein a channel 83 (see Fig. 10). The channel 83 leads the adhesive from the pump casing 14 to the nozzle 17. The support portion 16 includes the nozzle 17 at the lower end portion 44. The nozzle 17 extends leftward from the support portion 16. The support portion 16 includes a drive transmitting portion 41 at the upper end portion 42. The drive transmitting portion 41 supports an end portion of a movable portion 75 of an air cylinder 24. The air cylinder 24 includes air inlet ports 71 and 74. An intake/exhaust hose (not shown) is connected to each of the air inlet ports 71 and 74. The cloth bonding apparatus 1 controls an intake and an exhaust of a compressed air through the air inlet ports 71 and 74. The position of a piston inside a body portion 73 of the air cylinder 24 moves in accordance with the intake and exhaust control. The movable portion 75 is connected to the piston. Thus, the end portion of the movable portion 75 moves back and forth along with the movement of the piston.

The support portion 16 swings back and forth about the shaft portion 45 along with the back-and-forth movement of the movable portion 75 of the air cylinder 24. The nozzle 17 moves along with the swing of the support portion 16 to a position where the cloth bonding work is performed (hereinafter referred to as a use position) and to a position where maintenance is performed (hereinafter referred to as a maintenance position).

The nozzle 17 has a cylindrical shape. The nozzle 17 has a discharge port 86 (see Fig. 10) from which the adhesive is discharged at the bottom. When the worker performs the cloth bonding work, the discharge port 86 opposes the bed portion 11. When performing the bonding work, the worker inserts the nozzle 17 between the two layers of oppositely arranged cloths. The gear pump 124 supplies the adhesive to the nozzle 17 through the channel 83 provided inside the support portion 16. The nozzle 17 discharges the adhesive from the discharge port 86 onto the cloth. Consequently, the adhesive may be applied on the surface of the lower cloth positioned below the nozzle 17.

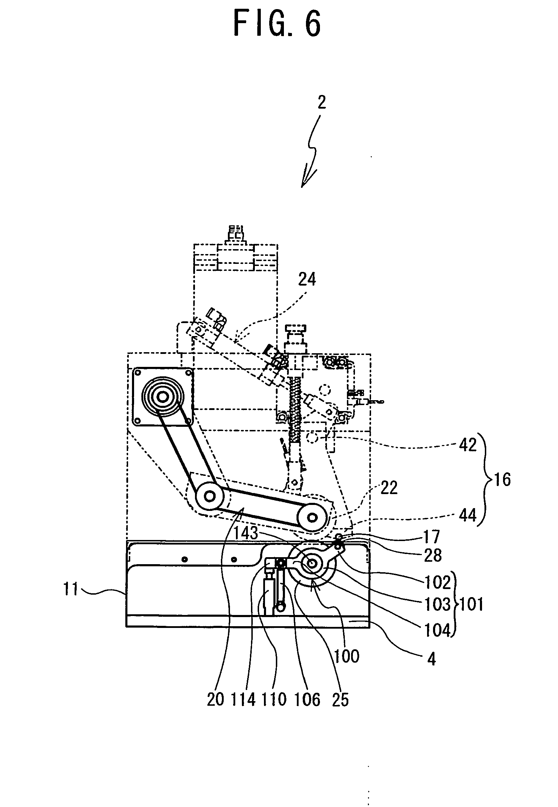

As shown in Figs. 2 and 3, the storage chamber 18 has a substantially rectangular parallelepiped shape with the vertical direction as the longitudinal direction. The storage chamber 18 extends upward from the left side of the arm portion 13 and from the back of the pump casing 14. The storage chamber 18 includes a body portion 46, a cover portion 47, and a cover shaft portion 48. The shape of the body portion 46 has a bottomed tube shape having an opening at the top. The cover portion 47 covers the opening at the top of the body portion 46. The body portion 46 has the cover shaft portion 48 at its upper end. The cover shaft portion 48 supports the cover portion 47 in an openable/closable manner. The storage chamber 18 stores the adhesive (not shown) inside the body portion 46. The stored adhesive may be supplied from the storage chamber 18 to the gear pump 124 (see Figs. 5 and 6) and to the nozzle 17 as needed.

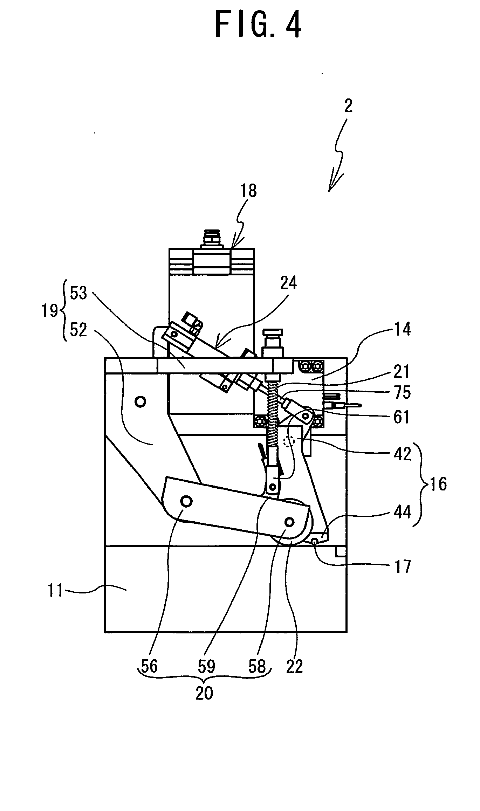

As shown in Fig. 2, the beam portion 19 includes a body portion 51, a spring support portion 53, and a column portion 52. The body portion 51 is a member extending horizontally leftward from the rear left end of the arm portion 13. The length of the body portion 51 in the right-and-left direction is about one third of the length of the bed portion 11 in the right-and-left direction. The spring support portion 53 has a plate shape and extends horizontally forward from the left end portion of the body portion 51. The length of the spring support portion 53 in the back-and-forth direction is about half the length of the bed portion 11 in the back-and-forth direction. As shown in Figs. 2 and 4, the column portion 52 extends obliquely downward from the body portion 51 at about 45 degrees relative to the horizontal plane. There is a gap between the lower end of the column portion 52 and the bed portion 11.

As shown in Fig. 2, the spring support portion 53 has a hole at the front end portion. The spring support portion 53 supports a shaft portion 61 in a vertically movable manner. The shaft portion 61 is inserted through the spring 21. The upper end part of the shaft portion 61 is inserted into the hole of the spring support portion 53. The column portion 52 has a shaft portion 62 extending horizontally leftward from the lower end part thereof. The shaft portion 62 supports a rear end portion 56 of a roller holding portion 20. The roller holding portion 20 may swing a front end portion 58 in the vertical direction with the shaft portion 62 as the center of swing. The body portion 51 is provided with an air cylinder 24 at the right side of the spring support portion 53. The air cylinder 24 is directed for moving the position of the support portion 16, which will be described later.

The roller holding portion 20 will be described. The front end portion 58 of the roller holding portion 20 rotatably supports the upper feed roller 22 having a cylindrical shape. The upper feed roller 22 is positioned near the back of the nozzle 17 that extends from the support portion 16. The roller holding portion 20 has a shaft support portion 59 on the upper face at a slightly forward position from the center. The shaft support portion 59 supports the lower end of the shaft portion 61 inserted through the spring 21. The spring 21 is interposed between the spring support portion 53 and the lower end of the shaft portion 61. The spring 21 urges the shaft portion 61 downward thereby urging the roller holding portion 20 connected to the shaft portion 61 downward.

As shown in Fig. 2, the bed portion 11 is provided with a hole 23 below the upper feed roller 22. A part of the lower feed roller 25 (see Fig. 5) slightly projects upward from the hole 23. The lower feed roller 25 rotates along with the upper feed roller 22. The lower feed roller 25 and the upper feed roller 22 feed the cloths sandwiched therebetween from front to back. The bed portion 11 is provided with another hole 26 below the nozzle 17. A part of an urging roller 28 (see Fig. 5) slightly projects upward from the hole 26. The urging roller 28 urges the cloth upward.

The inner configuration of the bonding machine 2 will be described below with reference to Fig. 5. As shown in Fig. 5, the bonding machine 2 includes therein the first motor 91, the second motor 92, the third motor 93, and the like.

The first motor 91 transmits a rotation drive force to the gear pump 124 via a rotary shaft 121 thereby driving the gear pump 124. The gear pump 124 includes a drive gear 122 and a driven gear (idler gear) 123. The drive gear 122 is fixed at the left end of the rotary shaft 121. Accordingly, the drive gear 122 rotates along with the rotary shaft 121. The driven gear 123 meshes with the drive gear 122. The first motor 91 is positioned inside the arm portion 13 and to the right side of the portion where the pump casing 14 is connected to the arm portion 13. The rotary shaft 121 extends inside the pump casing 14 leftward from the rotary shaft of the first motor 91. The drive gear 122 and the driven gear 123 supply an appropriate amount of the adhesive to the nozzle 17.

The second motor 92 transmits a rotation drive force to the upper feed roller 22 via the rotary shafts 126, 127, 128 and belts 129, 130 thereby driving the upper feed roller 22. The second motor 92 is positioned inside the arm portion 13 and to the right side of the portion where the beam portion 19 is connected with the arm portion 13. The rotary shaft 126 extends leftward from the rotary shaft of the second motor 92 and extends through the body portion 51. The left end of the rotary shaft 126 is positioned inside the column portion 52. The left end of the rotary shaft 126 supports a pulley. The right end of the rotary shaft 127 is positioned inside the lower end of the column portion 52 and the left end of the rotary shaft 127 is positioned inside the rear end portion 56 of the roller holding portion 20. The right end and left end of the rotary shaft 127 each support a pulley. The rotary shaft 128 is a rotary shaft of the upper feed roller 22. The left end of the rotary shaft 128 is positioned inside the front end portion 58 of the roller holding portion 20 and supports a pulley. The right end of the rotary shaft 128 projects from the front end portion 58 and supports the upper feed roller 22. The belt 129 is crossed between the pulley at the left end of the rotary shaft 126 and the pulley at the right end of the rotary shaft 127 inside the column portion 52. The belt 130 is crossed between the pulley at the left end of the rotary shaft 127 and the pulley at the left end of the rotary shaft 128 inside the roller holding portion 20. The upper feed roller 22 rotates along with the rotation of the second motor 92.

The third motor 93 transmits a rotation drive force to the lower feed roller 25 via a rotary shaft 141 and a belt 142 thereby driving the lower feed roller 25. The lower feed roller 25 is cylindrical and is fixed to the rotary shaft 141. The lower feed roller 25 is positioned below the upper feed roller 22 and inside the bed portion 11. The bed portion 11 has a support portion 4 therein. The support portion 4 rotatably supports the rotary shaft 141. The belt 142 is crossed between a pulley of a rotary shaft of the third motor 93 and a pulley at the right end of the rotary shaft 141 inside the bed portion 11. The lower feed roller 25 rotates along with the rotation of the third motor 93.

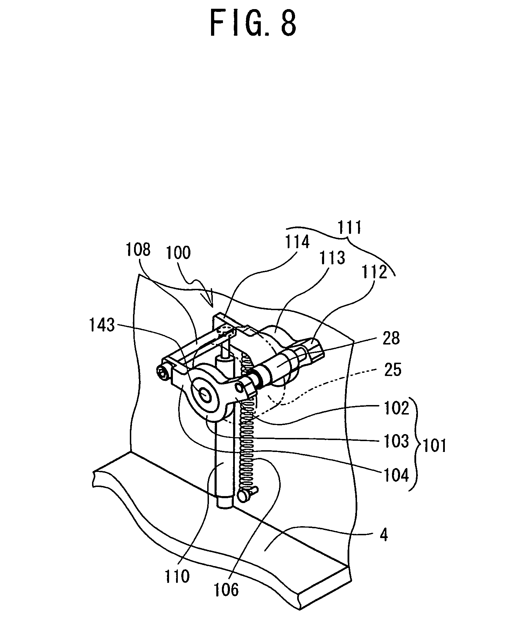

As shown in Figs. 5 and 6, the urging roller 28 is provided below the nozzle 17. An urging roller support portion 100 rotatably supports the urging roller 28. As shown in Fig. 8, the urging roller support portion 100 includes a left side plate 101, a right side plate 111, and a bridging portion 108. The left side plate 101 having a plate shape is positioned at the left side of the lower feed roller 25. The right side plate 111 having a plate shape is positioned at the right side of the lower feed roller 25. The bridging portion 108 connects the left side plate 101 and the right side plate 111.

As shown in Figs. 6 and 8, the left side plate 101 includes a first arm portion 102, a ring portion 103 and a second arm portion 104. The ring portion 103 having a circular plate shape is positioned in parallel with the left side face of the lower feed roller 25. The center of the ring portion 103 is at the same position as the center of a rotary shaft 143 of the lower feed roller 25. A diameter of the ring portion 103 is substantially half the diameter of the lower feed roller 25. The ring portion 103 includes a hole at the center. The rotary shaft 143 of the lower feed roller 25 is inserted through the hole. The second arm portion 104 extends horizontally backward from the ring portion 103. The first arm portion 102 extends forward and obliquely upward at about 45 degrees from the ring portion 103.

As shown in Fig. 8, the right side plate 111 opposes the left side plate 101 in such a manner that the lower feed roller 25 is interposed therebetween. The right side plate 111 has substantially the same shape as the left side plate 101. The right side plate 111 includes a first arm portion 112, a ring portion 113, and a second arm portion 114. The length of the second arm portion 114 in the back-and-forth direction is slightly longer than the length of the second arm portion 104 in the back-and-forth direction. The ring portion 113 includes a hole at the part. The rotary shaft 143 of the lower feed roller 25 is inserted through the hole.

The first arm portion 102 and the first arm portion 112 each have a hole at their end portions. A rotary shaft of the urging roller 28 is inserted through these holes. Thus, the first arm portions 102 and 112 rotatably support the urging roller 28. A distance between the urging roller 28 and the lower feed roller 25 is always constant. The bridging portion 108 extends rightward from the end of the second arm portion 104 to be connected to the second arm portion 114.

As shown in Figs. 6 and 8, a stopper 110 is provided below the second arm portion 114. The stopper 110 supports the bottom face of the rear end portion of the second arm portion 114. The stopper 110 has a bar shape with the vertical direction as the longitudinal direction. The stopper 110 extends upward from the support bed 4. The length of the stopper 110 in the vertical direction can be changed.

A spring 106 is provided in front of the stopper 110. The lower end portion of the spring 106 is connected to the support bed 4. The upper end portion of the spring 106 is connected to the right side face of the second arm portion 114 at the substantial center of the second arm portion 114 in the back-and-forth direction. The spring 106 pulls down the second arm portion 114. The urging roller support portion 100 swings about the rotary shaft 143. The ends of the first arm portions 102 and 112 are raised due to the urging force of the spring 106. Consequently, the urging roller 28 moves upward. By changing the length of the stopper 110 in the vertical direction, a swingable range of the urging roller support portion 100 can be adjusted. Thus, the stopper 110 can adjust such that the urging roller 28 does not project upward from the hole 26 beyond a specified distance.

The channels for the adhesive in the bonding machine 2 will be described with reference to Figs. 9 and 10.

As shown in Fig. 9, the body portion 46 of the storage chamber 18 has a peripheral wall and a bottom wall. The body portion 46 stores the adhesive within a space enclosed by the peripheral wall and the bottom wall. The channel 81 is a through hole extending toward the pump casing 14 at the lower end of the peripheral wall of the pump casing 14 side. The channel 81 is a channel for leading the adhesive stored in the body portion 46 to the gear pump 124.

The channel 81 extends from the storage chamber 18 to the center of the first pump casing 31 of the pump casing 14. The channel 81 bends rightward at a right angle at the center of the first pump casing 31 and reaches a position above where the drive gear 122 and the driven gear 123 intermesh with each other.

As shown in Fig. 9, the channel 82 is a channel for leading the adhesive that has passed through the gear pump 124 to the channel 83 in the support portion 16. The channel 82 extends leftward from a position below where the drive gear 122 and the driven gear 123 (see Fig. 9) intermesh with each other. The channel 82 extending leftward bends downward, bends leftward at its lower end, passes through the shaft portion 45 to connect to the channel 83 inside the support portion 16.

The channel 83 is a channel for leading the adhesive that has flowed through the channel 82 to the nozzle 17. The channel 83 extends inside the support portion 16 from the upper end portion 42 to the lower end portion 44 to connect to a channel 84 inside the nozzle 17.

The channel 84 is a channel for leading the adhesive that has flowed through the channel 83 to the discharge port 86. The discharge port 86 is provided at the lower part of the left end of the nozzle 17. The channel 84 extends inside the nozzle 17 from the right end to the left end to connect to the discharge port 86. The adhesive is discharged out of the discharge port 86.

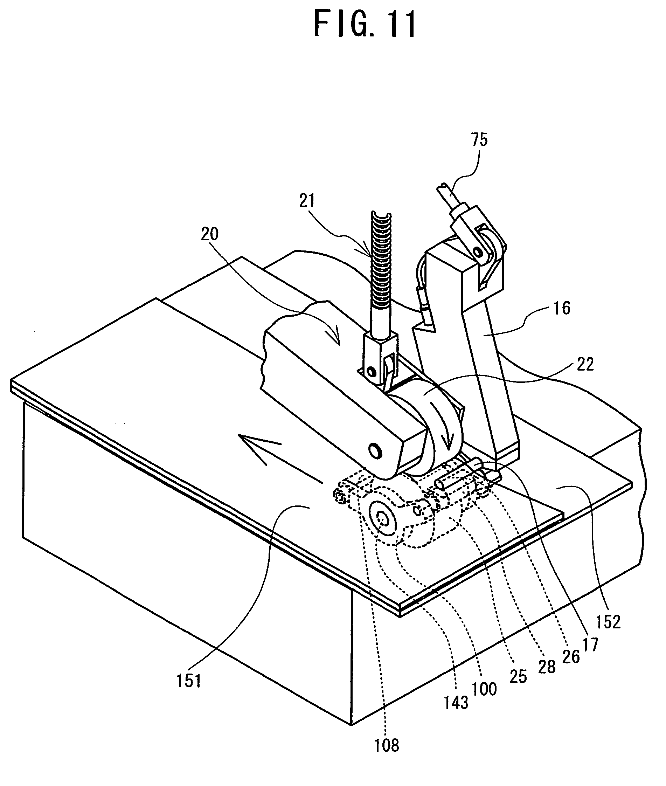

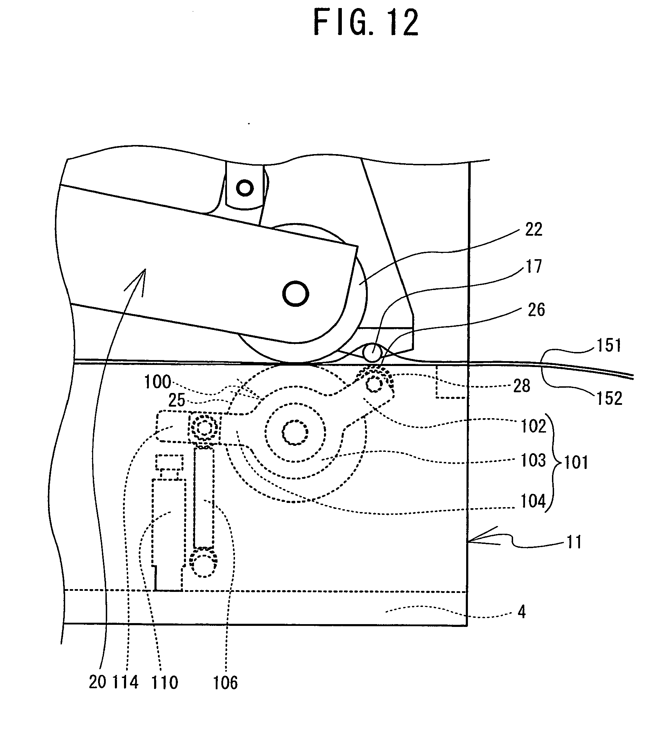

The operation of the bonding machine 2 at the time of the bonding work will be described below with reference to Figs. 11 and 12, using an example where an upper cloth 151 and a lower cloth 152 are bonded with each other.

As shown in Figs. 11 and 12, when performing the bonding work, the bonding machine 2 moves the movable portion 75 of the air cylinder 24 forward to thereby move the support portion 16 to the use position. The worker arranges the upper cloth 151 and the lower cloth 152 in a stacked manner and sandwiches the nozzle 17 at a position where the cloths are bonded. The worker vertically sandwiches the upper cloth 151 and the lower cloth 152 between the upper feed roller 22 and the lower feed roller 25 behind the nozzle 17.

When the worker steps on and presses down the pedal 208 (see Fig. 1) in the aforementioned state, the gear pump 124 (see Fig. 5) is driven. Consequently, the adhesive is supplied through the channels 81 to 83, discharged from the nozzle 17, and adheres onto the lower cloth 152. As shown in Fig. 11, the upper feed roller 22 and the lower feed roller 25 rotate to feed the upper cloth 151 and the lower cloth 152 from front to back, that is, along a direction that intersects with a direction in which the adhesive is discharged from the nozzle 17. The spring 21 urges the upper feed roller 22 downward. Thus, the upper feed roller 22 and the lower feed roller 25 press and bond the upper cloth 151 and the lower cloth 152 together.

As shown in Fig. 12, the urging roller 28 slightly projects upward from the hole 26 (see Fig. 11). The spring 106 urges the urging roller 28 upward. The urging roller 28 urges the lower cloth 152 upward to thereby press the lower cloth 152 to the nozzle 17. The urging roller 28 moves in the vertical direction depending on the thickness of the lower cloth 152. The urging roller 28 largely moves downward when the thickness of the lower cloth 152 is large. The urging roller 28 slightly moves downward when the thickness of the lower cloth 152 is small. The urging roller 28 always presses the lower cloth 152 to the nozzle 17 with a constant force.

The amount of adhesive discharged from the nozzle 17 changes depending on the positional relationship between the nozzle 17 and the lower cloth 152. When a gap is present between the nozzle 17 and the lower cloth 152, the adhesive discharged from the nozzle 17 is more than the appropriate amount. When the lower cloth 152 is strongly pressed to the nozzle 17, the adhesive is not discharged from the nozzle 17. On the contrary, in the cloth bonding apparatus 1, the strength of pressing of the lower cloth 152 to the nozzle 17 by the urging roller 28 can be adjusted with the spring 106. Thus, the urging roller 28 presses the lower cloth 152 to the nozzle 17 with an optimal force. Consequently, the cloth bonding apparatus 1 can apply an appropriate amount of adhesive to the lower cloth 152.

When the urging roller 28 largely moves upward, the upper end of the stopper 110 contacts the bottom of the second arm portion 114. The stopper 110 supports the second arm portion 114 from below. Thus, the urging roller 28 does not move upward beyond a specified distance.

As described above, the urging roller 28 urges the lower cloth 152 upward. The urging roller 28 always presses the lower cloth 152 to the nozzle 17 with a constant force. Consequently, even in a case where the thickness of the lower cloth 152 is small, there will be no gap between the nozzle 17 and the lower cloth 152. Even in a case where the thickness of the lower cloth 152 is large, the urging roller 28 does not strongly press the lower cloth 152 to the nozzle 17. Consequently, the adhesive may be applied on the lower cloth 152 in a uniform thickness.

Because the urging roller 28 is rotatable, the urging roller 28 does not generate an unnecessary resisting force while the cloth is fed. Consequently, the cloth bonding apparatus 1 can prevent the cloth from being corrugated by means of the urging roller 28.

The spring 106 urges the urging roller 28 upward. The spring 106 can adjust the position of the urging roller support portion 100 when the thickness of the lower cloth 152 has changed. Thus, the worker may not need to adjust the position of the lower cloth 152, even when the thickness of the lower cloth 152 has changed.

The center of swing of the urging roller support portion 100 is the same as the center of rotation of the lower feed roller 25. Thus, a distance between the lower feed roller 25 and the urging roller 28 is always constant. Thus, even when the urging roller 28 swings, the urging roller 28 does not contact with the lower feed roller 25. The swing shaft of the urging roller support portion 100 can be shared with the rotary shaft of the lower feed roller 25. Accordingly, the structure of the cloth bonding apparatus 1 may be simplified, thereby making the cloth bonding apparatus 1 smaller in size.

The upper feed roller 22 in Fig. 1 and the lower feed roller 25 in Fig. 4 correspond to a feeding portion and a second roller of the present invention. The urging roller 28 in Fig. 4 corresponds to a support portion and a first roller of the present invention. The urging roller support portion 100 in Fig. 4 and the spring 106 in Fig. 5 correspond to an urging mechanism of the present invention.

The present invention is not limited to the above embodiment. The invention is defined and limited by the claims, and within the claims' scope, various modifications may be made thereto. For example, the spring 106 is provided below the second arm portion 114 in the above embodiment. The spring 106 pulls down the second arm portion 114 to push up the urging roller 28. The present invention is not limited to the structure. The spring 106 may be provided above the second arm portion 114. In such a case, the spring 106 may push down the second arm portion 114 to push up the urging roller 28. The spring 106 may be connected to the first arm portion 102 or the first arm portion 112. The spring 106 may directly urge the first arm portion 102 or the first arm portion 112 upward. The spring 106 may be provided above or below the first arm portion 102 or the first arm portion 112.

The spring 106 is a so-called coil spring in the aforementioned embodiment, but the present invention is not limited to the coil spring. The cloth bonding apparatus 1 may urge the urging roller 28 upward by giving a rotation force to the urging roller support portion 100 via a spiral spring.

The stopper 110 in the aforementioned embodiment may be changed to an air cylinder. The length of the stopper 110 in the vertical direction may be varied by controlling the air cylinder.

The first arm portions 102 and 112 support the rotary shaft of the urging roller 28 in the aforementioned embodiment. The present invention is not limited to this structure. A motor for driving the urging roller 28 may be provided. With this structure, the urging roller 28 may feed the lower cloth 152 from front to back while urging the lower cloth 152 upward.

Examples in which the cloth bonding apparatus bonds separate pieces of cloths together are given in the above-described embodiment and the modified embodiment.
However, the cloth bonding apparatus may bond folded portions of one folded cloth. In other words, the cloth bonding apparatus may bond two layers of cloth(s).

## Claims

1. A cloth bonding apparatus (1), comprising:
a nozzle (17) through which an adhesive is dischargeable onto a first layer of cloth;
a feeding portion (22, 25) adapted to press and feed the first layer of cloth with a second layer of cloth in a direction intersecting with a direction in which the adhesive is discharged from the nozzle (17);
a support portion (28) that is positioned opposite to the nozzle (17) in such a manner that the first layer of cloth can be interposed between the support portion (28) and the nozzle (17):
**characterized in that**
the support portion (28) is adapted to support the first layer of cloth by moving toward the nozzle (17); and
that the cloth bonding apparatus (1) further comprises an urging mechanism (100, 106) that urges the support portion (28) toward the nozzle (17).

2. The cloth bonding apparatus (1) according to claim 1, wherein:
the support portion (28) includes a first roller (28);
the feeding portion (22, 25) includes a second roller (25);
the urging mechanism (100, 106) includes:
an arm portion (100) that rotatably supports the first roller (28); and
a spring portion (106) that is connected to the arm portion (100),
the arm portion (100) rotatably supports the first roller (28) at an end portion;
and
the second roller (25) has a shaft (143) at the rotation center that swingably supports the arm portion (100).

3. The cloth bonding apparatus (1) according to claim 1, wherein the support portion (28) includes a first roller (28).

4. The cloth bonding apparatus (1) according to claim 1 or 3, wherein the feeding portion (22, 25) includes a second roller (22, 25).

5. The cloth bonding apparatus (1) according to any one of claims 1, 3 and 4, wherein the urging mechanism (100, 106) includes:
an arm portion (100) that supports the support portion (28); and
a spring portion (106) that is connected to the arm portion (100).

6. The cloth bonding apparatus (1) according to any of claims 1 to 5, further comprising a stopper (110) that restricts the support portion (28) so as not to move toward the nozzle (17) beyond a specified distance.

## Patentansprüche

1. Stofffügegerät (1) mit:
einer Düse (17), durch die ein Klebemittel auf eine erste Stofflage auslassbar ist;
einem Vorschubabschnitt (22, 25), der daran angepasst ist, die erste Stofflage mit einer zweiten Stofflage in einer Richtung zu drücken und vorzuschieben, die jene Richtung schneidet, in der das Klebemittel aus der Düse (17) ausgelassen wird;
einem Stützabschnitt (28), der gegenüber der Düse (17) derart positioniert ist, dass die erste Stofflage zwischen dem Stützabschnitt (28) und der Düse (17) angeordnet werden kann;
**dadurch gekennzeichnet, dass**
der Stützabschnitt (28) daran angepasst ist, die erste Stofflage durch eine Bewegung zu der Düse (17) zu stützen; und
dass das Stofffügegerät (1) des Weiteren einen Drückmechanismus (100, 106) aufweist, der den Stützabschnitt (28) zu der Düse (17) drückt.

2. Stofffügegerät (1) gemäß Anspruch 1, wobei:
der Stützabschnitt (28) eine erste Walze (28) aufweist;
der Vorschubabschnitt (22, 25) eine zweite Walze (25) aufweist;
der Drückmechanismus (100, 106) folgendes aufweist:
einen Armabschnitt (100), der die erste Walze (28) drehbar stützt; und
einen Federabschnitt (106), der mit dem Armabschnitt (100) verbunden ist,
wobei der Armabschnitt (100) die erste Walze (28) an einem Endabschnitt drehbar stützt; und
wobei die zweite Walze (25) einen Schaft (143) an der Drehmitte hat, der den Armabschnitt (100) schwenkbar stützt.

3. Stofffügegerät (1) gemäß Anspruch 1, wobei der Stützabschnitt (28) eine erste Walze (28) aufweist.

4. Stofffügegerät (1) gemäß Anspruch 1 oder 3, wobei der Vorschubabschnitt (22, 25) eine zweite Walze (22, 25) aufweist.

5. Tuchfügegerät (1) gemäß einem der Ansprüche 1, 3 und 4, wobei der Drückmechanismus (100, 106) folgendes aufweist:
einen Armabschnitt (100), der den Stützabschnitt (28) stützt; und
einen Federabschnitt (106), der mit dem Armabschnitt (100) verbunden ist.

6. Tuchfügegerät (1) gemäß einem der Ansprüche 1 bis 5, des Weiteren mit einem Stopper (110), der den Stützabschnitt (28) so begrenzt, dass er sich nicht zu der Düse (17) über einen spezifischen Abstand hinaus bewegt.

## Revendications

1. Appareil de liaison de tissus (1), comprenant :
une buse (17) par laquelle une colle peut être libérée sur une première couche de tissu ;
une portion d'amenée (22, 25) adaptée pour presser et amener la première couche de tissu avec une seconde couche de tissu dans une direction croisant une direction dans laquelle la colle est libérée de la buse (17) ;
une portion de support (28) qui est positionnée de manière opposée à la buse (17) de telle sorte que la première couche de tissu peut être interposée entre la portion de support (28) et la buse (17) ;
**caractérisé en ce que**
la portion de support (28) est adaptée pour supporter la première couche de tissu en se déplaçant vers la buse (17) ; et
**en ce que** l'appareil de liaison de tissus (1) comprend en outre un mécanisme de poussée (100, 106) qui pousse la portion de support (28) vers la buse (17).

2. Appareil de liaison de tissus (1) selon la revendication 1, dans lequel :
la portion de support (28) comprend un premier rouleau (28) ;
la portion d'amenée (22, 25) comprend un second rouleau (25) ;
le mécanisme de poussée (100, 106) comprend :
une portion de bras (100) qui supporte de manière rotative le premier rouleau (28) ; et
une portion de ressort (106) qui est reliée à la portion de bras (100),
la portion de bras (100) supporte de manière rotative le premier rouleau (28) à une portion d'extrémité ;
et
le second rouleau (25) a un arbre (143) au niveau du centre de rotation qui supporte de manière pivotante la portion de bras (100).

3. Appareil de liaison de tissus (1) selon la revendication 1, dans lequel la portion de support (28) comprend un premier rouleau (28).

4. Appareil de liaison de tissus (1) selon la revendication 1 ou 3, dans lequel la portion d'amenée (22, 25) comprend un second rouleau (22, 25).

5. Appareil de liaison de tissus (1) selon l'une quelconque des revendications 1, 3 et 4, dans lequel le mécanisme de poussée (100, 106) comprend :
une portion de bras (100) qui supporte la portion de support (28) ; et
une portion de ressort (106) qui est reliée à la portion de bras (100).

6. Appareil de liaison de tissus (1) selon l'une quelconque des revendications 1 à 5, comprenant en outre un élément de butée (110) qui limite la portion de support (28) afin qu'elle ne se déplace pas vers la buse (17) au-delà d'une distance spécifiée.
